# EUROPEAN PATENT SPECIFICATION

(11) **EP 3 573 479 B1**
(45) Date of publication and mention of the grant of the patent: **23.08.2023**
(21) Application number: 18706970.3
(22) Date of filing: 08.02.2018
(51) Int. Cl.: A23L 7/126, A23L 7/13, A23L 7/165, A21D 13/043, A21D 13/047

(54) **SNACK FOOD PELLETS**
IMBISSPRODUKT IN FORM VON PELLETS
GRANULÉS POUR ALIMENT DE TYPE GRIGNOTAGE

(30) Priority: 08.02.2017 GB 201702036
(43) Date of publication of application: 04.12.2019
(73) Proprietor: Frito-Lay Trading Company GmbH, 3011 Bern (CH)
(72) Inventor: DAVIES, Suzanne, Leicester Leicestershire LE4 1ET (GB); WILLIAMS, James, Leicester Leicestershire LE4 1ET (GB)
(74) Representative: Harris, Oliver John Richard
(86) International application number: PCT/EP2018/053211
(87) International publication number: WO 2018/146213

(56) References cited:
- WO-A1-2012/071491
- WO-A1-2015/157702
- GB-A- 750 217
- GB-A- 2 522 854
- JP-A- S57 170 158
- JP-A- S57 186 449

## Description

The present invention relates to snack food pellets and to a method of manufacturing snack food pellets. The present invention also relates to a method of manufacturing a snack food produced from the snack food pellets.

The invention is defined by the appended claims.

The manufacture of snack food pellets, which are starch-based, is well known. Various compositions of snack food pellets are known.

Dried pellets are conventionally produced by an extrusion process with a subsequent drying step to achieve a desired moisture content in the pellet. A cereal-based dough, or a tuber-based dough, for example potato-based dough, having a typical moisture content of from 24 to 35 wt%, based on the weight of the dough, is provided. The dough is typically formed by hydrating dehydrated ingredients, such as cereal flour or potato flour. The dough is extruded through a die plate having one or more die orifices. The dough is shaped in cross-section upon exiting the extruder, and the extruded dough is cut to form a plurality of individual dough pieces of desired mass, shape and dimensions. The drying step dries the pieces to form pellets having a typical moisture content of from 10 to 12 wt% based on the weight of the pellets. Such a moisture content is provided to achieve both shelf-life stability of the pellets and expansion upon frying. The pellets are then cooked, for example by frying in oil, which causes expansion the pellets to form an expanded snack food of a desired shape and configuration. The expansion is at least partially achieved by the moisture content in the pellet forming steam at the elevated frying temperature and the steam causes the starch matrix, which has become gelatinized and plasticized at the elevated frying temperature, to expand.

There is a generally recognised desire in the snack food manufacturing art to reduce manufacturing costs of the snack food product without compromising the product quality. It is necessary to ensure that any new or modified cooking process still produces a high quality product to the consumer which meets customer acceptance and is reliably and consistently achievable despite high production volumes. In particular, snack food chips are normally required to meet very strict customer acceptance criteria for the respective product, for example having specific moisture and oil-in-chip contents, and the desired taste, organoleptic and other sensory attributes.

The product design of snack food pellets made by conventional means is constrained by the correlation of certain product attributes which are affected by changes in composition or process variables. For example, increased starch gelatinization can deliver a more aerated structure through increased pellet expansion and a softer, more melting texture. In addition, the conventional pellet production process, incorporating extrusion of a homogeneous mass, yields highly homogeneous products.

For example, therefore, the consistent achievement of a pre-specified moisture composition of a pellet having pre-specified mass, shape and dimensions is important for achieving consumer acceptance in the resultant cooked snack food piece. There is a challenge to reduce pellet manufacturing costs and to continue to produce the required product attributes.

The present invention aims at least partially to solve these problems of known snack food pellets and their manufacture.

WO 2015/157702 A1 discloses a process for making flour-based food products that have a final moisture content of less than 3 %.

WO 2012/071491 A1 discloses a method for making a quick-cook grain or pulse via flat plate compression or gun puffing by controlling the porosity of the grain or pulse.

JP S57-186449 A discloses the gelatinization and flattening and drying of ungelatinized grains, by treating the grains in rolls heated at a specific temperature.

JP S57-170158 A discloses the flattening of cereal grains by compression between hot rollers to convert starch into alpha-form starch, thus producing grain flakes containing alpha-form starch.

GB 2522854 A discloses a starch-based snack food pellet for manufacturing an expanded snack food comprises a starch matrix including a crystalline fraction and an amorphous fraction, wherein the weight ratio of the crystalline fraction to the amorphous fraction is from 0.52 to 0.60.

GB 750217 A discloses a process for producing foodstuffs from a dry powder obtained from starch-containing tubers, e.g. potatoes, in which process the powder is mixed with water to form a mixture having a water content not exceeding 35 % by weight, which is then pressed into a tough to hard mass.

The present invention accordingly provides a snack food pellet according to claim 1.

The present invention also provides a method of manufacturing a snack food pellet according to claim 6.

The pellet has a shape and composition for subsequent expansion in hot oil, hot air or a microwave to form an expanded snack food product.

The present invention further provides a method of producing a snack food according to claim 14, the method comprising the steps of:
i. providing a plurality of pellets according to claims 1-5 or manufactured according to the method of claims 6-13 and
ii. expanding the pellets during a cooking step to produce a plurality of snack food pieces.

The present invention further provides a snack food according to claim 15, which is produced by the method of claim 14 wherein the snack food comprises a cellular microstructure having cellular voids with an average elongation, defined as the maximum cellular void length divided by the minimum cellular void width within the range of from 1.41 to 1.46.

Certain more specific aspects of the present invention are defined in the dependent claims.

The preferred embodiments of the present invention are predicated on the finding by the present inventors that the use of heat pressing can provide a number of advantages and technical effects as compared to conventional extrusion technology for manufacturing pellets.

First, the heat pressing process enables the use of a lower moisture content for the dough. The dough is heat pressed into a stationary mould by a moving platen, or is compressed between opposed platens, either or both of which may move. During heat pressing, the dough is subjected to reduced shear forces and flow as compared to an extrusion process. Therefore, the dough can have a higher viscosity than is typically used for extrusion, and consequently a lower moisture content.

The heat pressed dough is not required to flow through a screw barrel or to be moulded into a shape on exiting the extruder. The lower moisture content enables the elimination of any drying step subsequent to the pressing step in order to provide a moisture content suitable for subsequent cooking and expansion of the starch to form a cooked expanded snack food piece, for example a chip. The avoidance of a subsequent drying process as compared to the known extrusion process simplifies the pellet manufacturing process and reduces the production costs.

In accordance with the present invention, the dough moisture is from 16 to 20 wt% for heat pressing as compared to a typical dough moisture of from 24 to 35 wt% for extrusion. The final pellet moisture is reduced during heat pressing as a result of some moisture evaporation at the elevated temperature during the heat pressing step, and is most preferably from 10.5 to 11.5 wt%, which is an ideal range for achieving expansion of the pellet during cooking, for example frying. The heat pressing can lower the pellet moisture content to this desired range without requiring a drying step, whereas extrusion generally does require an additional drying step to condition the pellet for reliable and uniform expansion during cooking.

Second, the heat pressing process was found to be readily controllable to produce a new microstructure to the starch-based pellet. The heat pressing process significantly lowers or eliminates shear forces acting on the starch, and the low shear and low moisture enable the heat pressing process to minimize or eliminate starch gelatinisation. Consequently, the substantially ungelatinized starch granules in the dough substantially remain as substantially ungelatinized starch granules in the pellet. The pellet comprises a unique microstructure of compacted and agglomerated starch granules, with a minimal or no continuous starch matrix between the granules.

By limiting starch gelatinisation, the final product characteristics of the expanded snack food piece can be controlled. The presence of an agglomeration of compacted starch granules in the pellet provides a high level of uniformity in the pellet microstructure, and a high density of granules per unit volume of the pellet. This in turn provides a very high number of nucleation points for starch expansion, as a result of steam generation, during cooking, for example during frying. This structure provides new textures in the snack food pieces.

The high proportion of ungelatinized starch, which is crystalline rather than amorphous in microstructure, in the granules of the pellet is also believed by the present inventors to result in a higher expression in the final expanded snack food piece of the characteristic of the source of the starch component. For example, when potato starch granules are employed, the resulting substantially ungelatinized starch granules in the pellet provide that the expanded snack food piece exhibits a more pronounced potato characteristic than would be expected by an extruded composition, which generally results in a high degree of starch gelatinisation in the pellet.

Third, the heat pressing applies a pressure to the starch granules which compacts the granules to form an agglomerate of the starch granules which mutually contact each other. The pellet is in the form of a layer. There is no or only minimal continuous starch matrix, and there is no or only minimal gelatinised or amorphous starch.

Any gelatinised or amorphous starch, which is between the substantially ungelatinized and substantially crystalline starch granules, may be derived from some gelatinization of surfaces of some or all of the starch granules and/or some gelatinized starch which either has been added as a pre-gelatinized starch ingredient to the dough which is then pressed and/or has been formed during pressing from a further minor starch ingredient which is present in the dough, in addition to the starch-based granules comprising ungelatinized starch.

The starch granules are pressed together to agglomerate, but remain substantially ungelatinized. This increases the number of nucleation points for expansion in the pellet, and these nucleation points are uniformly distributed throughout the pellet microstructure. The resultant expanded snack food piece has a higher number of cellular voids uniformly distributed throughout the starch microstructure, and higher cell wall thickness, as compared to a typical snack food piece produced from an extruded pellet. This provides a crispier expanded snack food piece, and the consumer would perceive the enhanced crispiness of the product.

Fourth, in the expanded snack food produced from the pellet the cellular voids are elongated, but with a low degree of elongation as compared to an expanded snack food produced from an extruded pellet whereas the pellet is in the form of a layer where the layer is sheeted during extrusion. From the heat pressed pellet the cellular voids are elongated to a reduced extent as compared to from the extruded pellet, because the heat pressing avoids the use of a sheeting process when the starch is in a gelatinised rubbery phase. When cooked and expanded, the resultant snack food piece produced from the heat pressed pellet has a different microstructure as compared to an extruded pellet, which provides additional and novel characteristics of an expanded snack food piece.

Therefore, the heat pressing method can produce a new pellet microstructure which in turn can result in new characteristics for the final expanded snack food piece.

Embodiments of the present invention will now be described by way of example only with reference to the accompanying drawings, in which:
Figure 1 schematically illustrates a process flow diagram of a method of manufacturing a snack food pellet in accordance with an embodiment of the present invention;
Figure 2 schematically illustrates an apparatus for manufacturing a snack food pellet in accordance with the method of Figure 1;
Figure 3 schematically illustrates a snack food pellet produced by the method of Figure 1; and
Figure 4 schematically illustrates a micrograph of a pellet surface of a pellet produced by the method of Figure 1.

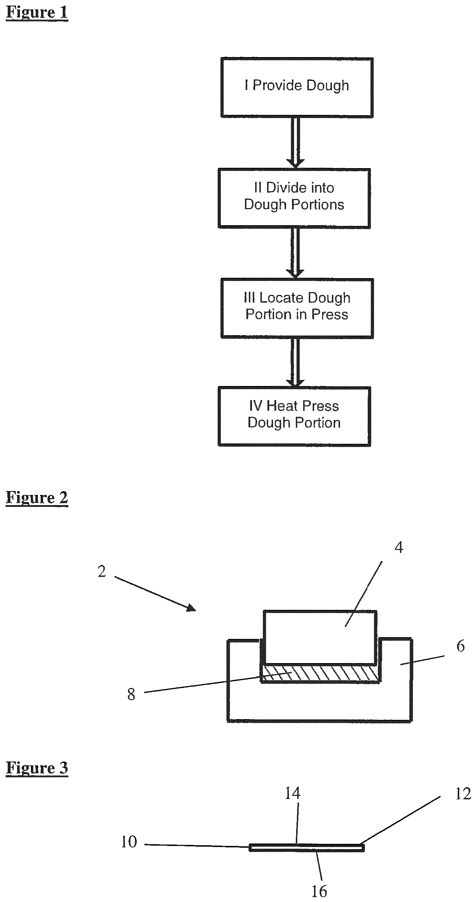

Referring to Figure 1 of the accompanying drawings, there is schematically illustrated a process flow of a method of manufacturing a snack food pellet according to an embodiment of the present invention, and Figure 2 illustrates an apparatus for carrying out the method.

In the method, in step I a dough is provided which comprises one or more starch-containing ingredients, derived from starch sources such as potato and cereals, for example wheat, maize, rice, oats, barley, etc. Other cereal crops could be used, as well as starch from pulses, legumes, cassava, etc. The starch-containing ingredients may be added as whole foods (e.g. potato flakes/granules; wheat flour) or as refined/isolated constituents (e.g. potato starch). The ingredients may be used individually or in combination with other starch-containing ingredients. The dough may further comprise one or more ingredients such as sugars, raising agents, seasoning, salts, emulsifiers, fats/oils, humectants, acids, bases, proteins, fibres, dairy ingredients, texture modifiers, acidity regulators or any combination thereof.

In the method, the dough comprises a plurality of starch-based granules. The starch granules comprise ungelatinized starch, and typically the starch component consists of ungelatinized starch. Typically, the plurality of starch granules comprise or consist of potato starch and the starch component of the starch-based granules is comprised of or consists of potato starch.

The dough is formed by simple mixing of the starch-based granules, and optional ingredients such as seasoning, with water to form a substantially homogeneous dough mixture. The dough has a moisture content of from 16 to 20 wt%, preferably from 16 to 18 wt%, based upon the weight of the dough. The mixing is readily controlled to provide a uniform distribution of fine water droplets throughout the dough so that a corresponding fine and uniform water distribution is present in the resultant pellet. This in turn provides a uniform expansion of the pellet as a result of localised steam generation during cooking of the pellet, for example by frying.

In step II, the dough is divided into portions, typically of a pre-set weight or volume, and each portion is intended to form an individual pellet. Typically, the dough portion has a volume of from 2,000 to 8,000 mm³, preferably from 2,300 to 4,500 mm³. The dough portion may have a weight of from 1 to 4 grams, preferably 1.5 to 2 grams. The portion, prior to pressing, has a thickness of from 1.5 to 5.5 mm, preferably from 1.7 to 3.5 mm.

Then, in step III the portion of the dough is located in a heated pressing apparatus 2, illustrated in Figure 2. The heated pressing apparatus 2 comprises a pair of pressing elements 4, 6 between which the dough portion 8 of the dough is located and pressed to form the pellet. There are upper and lower pressing elements 4, 6. The pressing elements 4, 6 are in the form of platens and typically each have a surface area of from 1250 to 1970 mm², preferably from 1520 to 1660 mm².

At least one, and optionally both, of the pressing elements 4, 6 is or are heated to a pressing temperature which is from 100 to 140 °C, preferably from 100 to 120 °C.

Thereafter, in step IV the dough portion 8 is pressed in the heated pressing apparatus 2 to form a pellet. The pressing time is from 10 to 50 seconds, preferably from 20 to 30 seconds. The pressing pressure is from 100,000 to 400,000 N/m² (1 to 4 Bar), preferably from 300,000 to 400,000 N/m² (3 to 4 Bar).

The temperature, pressure and pressing time are readily controlled to minimise or avoid any premature expansion of the starch as a result of stream generation in the starch at the elevated temperature of heat pressing.

Referring to Figure 3, the resulting pellet 10 comprises a plurality of starch granules pressed together to form an agglomerate of the starch granules. The pellet 10 is in the form of a layer 12. The structure and texture of the snack food product after expansion is strongly influenced by the nature and composition of the starch-containing ingredients in the pellet 10.

Typically, the pellet 10 consists of the plurality of starch granules pressed together to form the agglomerate and the pellet does not comprise a continuous starch-based matrix between the granules.

The pellet 10 comprises from 90 to 99 wt% starch granules and from 1 to 10 wt% continuous starch-based matrix between the granules, preferably from 95 to 99 wt% starch granules and from 1 to 5 wt% continuous starch-based matrix between the granules, each based upon the weight of the total starch in the pellet 10.

The pressed pellet 10 has a volume of from 1200 to 3800 mm³, preferably from 1200 to 2700 mm³. The layer 12 has two opposite surfaces 14, 16 and a thickness therebetween. The thickness is from 0.5 to 4 mm, preferably from 0.7 to 1.8 mm. The two opposite surfaces 14, 16 each have a surface area of from 1250 to 1970 mm², preferably from 1520 to 1660 mm². The two opposite surfaces 14, 16 each have from 600 to 1800, optionally from 675 to 1725, starch granules per mm² of the respective surface.

The pressing time and pressing temperature are controlled to provide that the pellet 10 has a moisture content of from 9 to 12.5 wt%, preferably from 10 to 11.5 wt%, further preferably from 10.5 to 11 wt%, based upon the weight of the pellet 10.

The pressing time and pressing temperature are controlled to provide that the agglomerate of the starch granules comprises from 60 to 99 wt% ungelatinized starch and from 1 to 40 wt% gelatinized starch, preferably from 80 to 99 wt% ungelatinized starch and from 1 to 20 wt% gelatinized starch, each based upon the weight of the total starch in the pellet 10.

The resulting pellet 10 is used in a method of producing a snack food. The method comprises providing a plurality of the pellets 10 and expanding the pellets 10 during a cooking step to produce a plurality of snack food pieces. The cooking step comprises frying, baking or microwaving.

The pellet 10 may be shaped and dimensioned to provide any desired shape and dimensions to the resultant expanded snack food piece using shape and dimension selection techniques well known to those skilled in the snack food art.

The present invention will now be described in greater detail with reference to the following non-limiting Examples.

### Example 1

A starch-based dough was prepared. The dough comprised a plurality of starch-based granules consisting of ungelatinized potato starch. In particular the dough comprised 0.2 g potato flakes, 1.1 g native potato starch, 0.2 g pre-gelatinised starch, and 0.0957 ml water.

The dough was substantially homogeneous and had a moisture content of 16 wt%, based upon the weight of the dough. A dough portion having a volume of 3000 mm³ and a weight of 1.6 grams was placed in an aluminium foil tray and then located in a heated pressing apparatus. The heated pressing apparatus comprises a pair of platens, a stationary lower plate on which the tray was positioned and an upper movable platen which was lowered down onto the dough portion to press the dough to form a pellet in the form of a disc-like layer. The pressing temperature was 120 °C, the pressing time was 30 seconds, and the pressing pressure was 400,000 N/m² (4 Bar).

The resultant pellet had a uniform starch microstructure, as summarised in Table 1. It was determined that with this moisture content, pellet formation by heat pressing was fully successful.

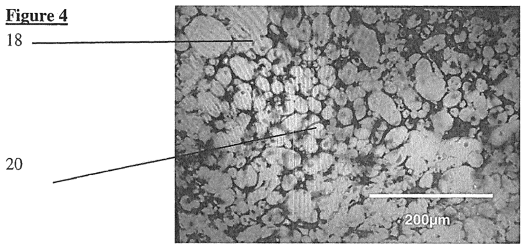

The pellet surface was examined by microscopy and a representative view of the pellet surface, indicated by reference numeral 18, is shown in Figure 4. It may be seen that the pellet consists of a compacted agglomerate of starch granules, a granule being indicated by reference numeral 20, which remained intact, and with a minimal continuous starch matrix, of gelatinized, and amorphous, starch was formed.

The starch granules are derived from the potato flakes and the native potato starch ingredients. The minor proportion of continuous starch matrix, of gelatinized, and amorphous, starch is primarily derived from the pre-gelatinised starch ingredient.

The average number of starch granules per 200 µm × 200 µm area was within the range of from about 27 to about 69. This equates substantially to from 600 to 1800, typically from 675 to 1725, starch granules per mm² of the pellet surface.

The pellet was fried to produce an expanded snack. The expanded snack comprised a starch matrix including a uniform distribution of cellular voids. The shape and dimensions of the cellular voids was analysed by microscopy and by C-Cell analysis which as used to measure the aspect ratio, or elongation of the cellular voids in the expanded snack food piece. The average cell elongation in a variety of expanded snacks produced from heat pressed pellets was analysed by C-Cell analysis; the C-Cell instrument and associated analytical software are available from C-Cell, Warrington, Cheshire, UK, (http://www.c-cell.info/). The average cell elongation is defined as: The average length to breath ratio of cells, independent of their relative orientation; Values close to 1 indicate rounded cells, and values >1 indicate greater elongation.

A variety of expanded snack food pieces produced according to Example 1 were analysed and the average cell elongation, or aspect ratio, of the cells was found to be within the range of from 1.41 to 1.46, as shown in Table 1.

**Table 1**

| | Dough Moisture wt% | Pellet Process | Pellet Properties | Cell Elongation Expanded Snack |
|---|---|---|---|---|
| | | | | |
| Example 1 | 16 | Heat pressing | Uniform starch microstructure | 1.41-1.46 |
| Example 2 | 18 | Heat pressing | Uniform starch microstructure | 1.38-1.41 |
| Example 3 | 20 | Heat pressing | Uniform starch microstructure | 1.39-1.42 |
| Comp. Ex. 1 | 8 | Heat pressing | Non-uniform starch microstructure | Un-expanded therefore not measured |
| Comp. Ex.2 | 12 | Heat pressing | Non-uniform starch microstructure | Un-expanded therefore not measured |
| Comp. Ex. 3 | 14 | Heat pressing | Non-uniform starch microstructure | Un-expanded therefore not measured |
| Comp. Ex. 4 | 25 | Heat pressing | Non-uniform starch microstructure | Unable to measure |
| Comp. Ex. 5 | 35 | Heat pressing | Non-uniform starch microstructure | Unable to measure |
| Comp. Ex. 6 | 35 | Extrusion | Uniform starch microstructure | 1.466 |
| Comp. Ex. 7 | 35 | Extrusion | Uniform starch microstructure | 1.48 |
| Comp. Ex. 8 | 35 | Extrusion | Uniform starch microstructure | 1.52 |

### Examples 2 and 3

Example 1 was repeated but with varying moisture content of the dough as shown in Table 1, Example 2 using 18 wt% moisture content and Example 3 using 20 wt% moisture content. The resultant pellets had a uniform starch microstructure. It was determined that with this moisture content range, pellet formation by heat pressing was substantially successful. A variety of expanded snack food pieces were analysed and the average cell elongation, or aspect ratio, of the cells was found to be within the range of from 1.38 to 1.41 for Example 2 and 1.39 to 1.42 for Example 3, as shown in Table 1.

### Comparative Examples 1 to 5

Example 1 was repeated but with a moisture content of the dough of 8, 12, 14, 25 or 35 wt% for Comparative Examples 1 to 5 respectively. The resultant pellets of Comparative Examples 1 to 5 each had an unacceptable non-uniform starch microstructure as summarised in Table 1. It was determined that with these moisture contents, pellet formation by heat pressing was unsuccessful in Comparative Examples 1 to 5.

Table 1 shows that there is a clearly preferred moisture content range of from 15 to 20 wt%, more preferably from 16 to 18 wt%, based upon the weight of the dough for achieving a heat pressed pellet with the desired uniform microstructure.

### Comparative Examples 6 to 8

Comparative Examples 6 to 8 were a commercial expanded snack food piece produced from an extruded pellet and sold in the United Kingdom under the trade mark Quavers ^{®} by Walkers Crisps, Leicester, UK. The extruded pellets have a high dough moisture content of 35 wt%. The known expanded snack food piece of Comparative Examples 6 to 8 were analysed by C-Cell analysis and the average cell elongation, or aspect ratio, of the cells was found to be within the general range of greater than 1.46 to 1.52 for the various Comparative Examples, providing an overall average of 1.48.

### Examples 4 to 8

A variety of expanded snacks produced from heat pressed pellets as described in Example 1 were analysed by C-Cell analysis. The results are shown in Table 2. These examples had varying proportions of native potato starch, as shown in Table 2. It was found that the average cell elongation, or aspect ratio, of the cells was within the range of 1.43 to 1.44.

**Table 2**

| | Dough Moisture wt% | Native Potato Starch wt% | Average Cell Elongation Expanded Snack (based on 4 replicates) |
|---|---|---|---|
| Example 4 | 16 | 30 | 1.43 |
| Example 5 | 16 | 40 | 1.44 |
| Example 6 | 16 | 50 | 1.43 |
| Example 7 | 16 | 60 | 1.44 |
| Example 8 | 16 | 70 | 1.43 |

The experimental data of the Examples and Comparative Examples shows that the heat pressing method to produce pellets in accordance with the present invention produces a pellet having new product attributes which are also manifested in the resultant expanded snack food piece. Therefore, the heat pressing process of the present invention can not only reduce the manufacturing costs and complexity of the pellet manufacturing process, but also can produce new product attributes which can be utilized to produce new snack food products, with new textures, mouthfeel, crispiness, etc., as compared to known products produced using pellet extrusion.

## Claims

1. A snack food pellet comprising a plurality of starch granules forming a layer, the granules comprising ungelatinized starch, the granules being pressed together into mutual contact to form an agglomerate of the starch granules; wherein the agglomerate of the starch granules comprises from 60 to 99 wt% ungelatinized starch and from 1 to 40 wt% gelatinized starch, each based upon the weight of the total starch in the pellet; wherein the pellet comprises from 90 to 99 wt% starch granules and from 1 to 10 wt% continuous starch-based matrix between the granules, each based upon the weight of the total starch in the pellet; wherein the layer is an elongate layer which has two opposite surfaces and a thickness therebetween and the two opposite surfaces each have from 600 to 1800 starch granules per mm² of the respective surface; and wherein the pellet has a moisture content of from 9 to 12.5 wt%.

2. A snack food pellet according to claim 1 wherein the pellet comprises from 95 to 99 wt% starch granules and from 1 to 5 wt% continuous starch-based matrix between the granules, each based upon the weight of the total starch in the pellet.

3. A snack food pellet according to claim 1 wherein the pellet consists of the plurality of starch granules pressed together to form the agglomerate and the pellet does not comprise a continuous starch-based matrix between the granules.

4. A snack food pellet according to any preceding claim, wherein the thickness is from 0.5 to 4 mm or from 0.7 to 1.8 mm; optionally wherein:
i) the two opposite surfaces each have a surface area of from 1250 to 1970 mm², or from 1520 to 1660 mm²; and/or
ii) the two opposite surfaces each have from 675 to 1725 starch granules per mm² of the respective surface.

5. A snack food pellet according to any preceding claim, wherein:
i) the pellet has a moisture content of from 10 to 12 wt%; and/or
ii) the agglomerate of the starch granules comprises from 80 to 99 wt% ungelatinized starch and from 1 to 20 wt% gelatinized starch, each based upon the weight of the total starch in the pellet; and/or
iii) the plurality of starch granules comprise at least one starch derived from of a cereal or a vegetable, optionally potato.

6. A method of manufacturing a snack food pellet, the method comprising the steps of:
i. providing a dough comprising a plurality of starch-based granules, the granules comprising ungelatinized starch, and a moisture content of from 16 to 20 wt% based upon the weight of the dough;
ii. locating a portion of the dough in a heated pressing apparatus; and
iii. pressing the dough portion in the heated pressing apparatus to form a pellet comprising a plurality of starch granules forming a layer, the granules comprising ungelatinized starch, the granules being pressed together into mutual contact to form an agglomerate of the starch granules;
wherein the pressing time and pressing temperature are controlled to provide that the agglomerate of the starch granules comprises from 60 to 99 wt% ungelatinized starch and from 1 to 40 wt% gelatinized starch, each based upon the weight of the total starch in the pellet;
wherein the pressing temperature is from 100 to 140 °C;
wherein the pressing time is from 10 to 50 seconds; and
wherein the pressing pressure is from 100,000 to 400,000 N/m².

7. A method according to claim 6, wherein the pressing time and pressing temperature are controlled to provide that the pellet has a moisture content of from 9 to 12.5 wt% based upon the weight of the pellet; optionally wherein the pressing time and pressing temperature are controlled to provide that the pellet has a moisture content of from 10 to 11.5 wt% based upon the weight of the pellet, or of from 10.5 to 11 wt%, based upon the weight of the pellet.

8. A method according to claim 6 or claim 7, wherein:
i) the pressing temperature is 100 to 120 °C; and/or
ii) the pressing time is from 20 to 30 seconds; and/or
iii) the pressing pressure is from 300,000 to 400,000 N/m²; and/or
iv) the portion, prior to pressing, has a thickness of from 1.5 to 5.5 mm, optionally from 1.7 to 3.5 mm.

9. A method according to any one of claims 6 to 8, wherein:
i) the dough has a moisture content of from 16 to 18 wt% based upon the weight of the dough; and/or
ii) the dough portion has a volume of from 2,000 to 8,000 mm³; optionally wherein the dough portion has a volume of from 2,300 to 4,500 mm³; and/or
iii) the pressed pellet has a volume of from 1,200 to 3,800 mm³, optionally from 1,200 to 2,700 mm³.

10. A method according to any one of claims 6 to 9, wherein the heated pressing apparatus comprises a pair of pressing elements between which the portion of the dough portion of the dough is located and pressed to form the pellet, optionally wherein:
i) at least one of the pressing elements is heated to the pressing temperature; and/or
ii) the pressing elements each have a surface area of from 1250 to 1970 mm²; optionally wherein the pressing elements each have a surface area of from 1520 to 1660 mm².

11. A method according to any one of claims 6 to 10, wherein the layer is an elongate layer and has two opposite surfaces and a thickness therebetween, optionally wherein:
i) the thickness is from 0.5 to 3 mm or from 0.6 to 1.5 mm; and/or
ii) the two opposite surfaces each have a surface area of from 1250 to 1970 mm², optionally from 1520 to 1660 mm²; and/or
iii) the two opposite surfaces each have from 600 to 1800 starch granules per mm² of the respective surface, optionally wherein the two opposite surfaces each have from 675 to 1725 starch granules per mm² of the respective surface.

12. A method according to any of claims 6 to 11, wherein:
i) the pressing time and pressing temperature are controlled to provide that the agglomerate of the starch granules comprises from 80 to 99 wt% ungelatinized starch and from 1 to 20 wt% gelatinized starch, each based upon the weight of the total starch in the pellet;
and/or
ii) the plurality of starch granules comprise at least one starch derived from of a cereal or a vegetable, optionally potato.

13. A method according to any one of claims 6 to 12, wherein:
i) the pellet consists of the plurality of starch granules pressed together to form the agglomerate and the pellet does not comprise a continuous starch-based matrix between the granules; or
ii) the pellet comprises from 90 to 99 wt% starch granules and from 1 to 10 wt% continuous starch-based matrix between the granules, each based upon the weight of the total starch in the pellet; and optionally wherein the pellet comprises from 95 to 99 wt% starch granules and from 1 to 5 wt% continuous starch-based matrix between the granules, each based upon the weight of the total starch in the pellet.

14. A method of producing a snack food, the method comprising the steps of:
i. providing a plurality of pellets according to any one of claims 1 to 5 or manufactured according to the method of any one of claims 6 to 13; and
ii. expanding the pellets during a cooking step to produce a plurality of snack food pieces; optionally wherein the cooking step comprises frying, baking or microwaving.

15. A snack food obtainable by the method of claim 14.

## Patentansprüche

1. Snack-Pellet umfassend eine Vielzahl von Stärkekörnchen, die eine Schicht bilden, wobei die Körnchen ungelatinierte Stärke enthalten, wobei die Körnchen in gegenseitigem Kontakt zusammengepresst sind, um ein Agglomerat der Stärkekörnchen zu bilden; wobei das Agglomerat der Stärkekörnchen 60 bis 99 Gew.-% ungelatinierte Stärke und 1 bis 40 Gew.-% gelatinierte Stärke umfasst, jeweils bezogen auf das Gewicht der gesamten Stärke in dem Pellet; wobei das Pellet 90 bis 99 Gew.-% Stärkekörnchen und 1 bis 10 Gew.-% kontinuierliche Matrix auf Stärkebasis zwischen den Körnchen umfasst, jeweils bezogen auf das Gewicht der gesamten Stärke in dem Pellet; wobei die Schicht eine längliche Schicht ist, die zwei gegenüberliegende Oberflächen und eine Dicke dazwischen aufweist und die zwei gegenüberliegenden Oberflächen jeweils 600 bis 1800 Stärkekörnchen pro mm² der jeweiligen Oberfläche aufweisen; und wobei das Pellet einen Feuchtigkeitsgehalt von 9 bis 12,5 Gew.-% aufweist.

2. Snack-Pellet nach Anspruch 1, wobei das Pellet 95 bis 99 Gew.-% Stärkekörnchen und 1 bis 5 Gew.-% kontinuierliche Matrix auf Stärkebasis zwischen den Körnchen umfasst, jeweils bezogen auf das Gewicht der gesamten Stärke in dem Pellet.

3. Snack-Pellet nach Anspruch 1, wobei das Pellet aus der Vielzahl von Stärkekörnchen besteht, die zusammengepresst sind, um das Agglomerat zu bilden, und das Pellet keine kontinuierliche Matrix auf Stärkebasis zwischen den Körnchen umfasst.

4. Snack-Pellet nach einem der vorstehenden Ansprüche, wobei die Dicke 0,5 bis 4 mm oder 0,7 bis 1,8 mm beträgt; optional wobei:
i) die beiden gegenüberliegenden Oberflächen jeweils eine Fläche von 1250 bis 1970 mm² oder von 1520 bis 1660 mm² aufweisen; und/oder
ii) die beiden gegenüberliegenden Oberflächen jeweils 675 bis 1725 Stärkekörnchen pro mm² der jeweiligen Oberfläche aufweisen.

5. Snack-Pellet nach einem der vorstehenden Ansprüche, wobei:
i) das Pellet einen Feuchtigkeitsgehalt von 10 bis 12 Gew.-% aufweist; und/oder
ii) das Agglomerat der Stärkekörnchen 80 bis 99 Gew.-% ungelatinierte Stärke und 1 bis 20 Gew.-% gelatinierte Stärke enthält, jeweils bezogen auf das Gewicht der gesamten Stärke im Pellet; und/oder
iii) die Vielzahl von Stärkekörnchen mindestens eine Stärke aus einem Getreide oder einem Gemüse, gegebenenfalls Kartoffel, enthält.

6. Verfahren zur Herstellung eines Snack-Pellets, wobei das Verfahren die folgenden Schritte umfasst:
i. Bereitstellen eines Teigs, der eine Vielzahl von Körnchen auf Stärkebasis umfasst, wobei die Körnchen ungelatinierte Stärke enthalten und einen Feuchtigkeitsgehalt von 16 bis 20 Gew.-% aufweisen, bezogen auf das Gewicht des Teigs;
ii. Platzieren einer Portion des Teigs in einer beheizten Pressvorrichtung; und
iii. Pressen der Teigportion in der beheizten Pressvorrichtung, um ein Pellet zu bilden, das eine Vielzahl von Stärkekörnchen umfasst, die eine Schicht bilden, wobei die Körnchen ungelatinierte Stärke enthalten, wobei die Körner in gegenseitigem Kontakt zusammengepresst werden, um ein Agglomerat der Stärkekörnchen zu bilden;
wobei die Presszeit und die Presstemperatur so gesteuert werden, dass das Agglomerat der Stärkekörnchen 60 bis 99 Gew.-% ungelatinierte Stärke und 1 bis 40 Gew.-% gelatinierte Stärke enthält, jeweils bezogen auf das Gewicht der gesamten Stärke im Pellet;
wobei die Presstemperatur 100 bis 140°C beträgt;
wobei die Presszeit 10 bis 50 Sekunden beträgt; und
wobei der Pressdruck 100.000 bis 400.000 N/m² beträgt.

7. Verfahren nach Anspruch 6, wobei die Presszeit und die Presstemperatur so gesteuert werden, dass das Pellet einen Feuchtigkeitsgehalt von 9 bis 12,5 Gew.-% aufweist, bezogen auf das Gewicht des Pellets; wobei optional die Presszeit und die Presstemperatur so gesteuert werden, dass das Pellet einen Feuchtigkeitsgehalt von 10 bis 11,5 Gew.-%, bezogen auf das Gewicht des Pellets, oder von 10,5 bis 11 Gew.-%, bezogen auf das Gewicht des Pellets, aufweist.

8. Verfahren nach Anspruch 6 oder Anspruch 7, wobei:
i) die Presstemperatur 100 bis 120°C beträgt; und/oder
ii) die Presszeit 20 bis 30 Sekunden beträgt; und/oder
iii) der Pressdruck 300.000 bis 400.000 N/m² beträgt; und/oder
iv) die Portion vor dem Pressen eine Dicke von 1,5 bis 5,5 mm, optional von 1,7 bis 3,5 mm aufweist.

9. Verfahren nach einem der Ansprüche 6 bis 8, wobei:
i) der Teig einen Feuchtigkeitsgehalt von 16 bis 18 Gew.-% aufweist, bezogen auf das Gewicht des Teigs; und/oder
ii) die Teigportion ein Volumen von 2.000 bis 8.000 mm³ hat; optional wobei die Teigportion ein Volumen von 2.300 bis 4.500 mm³ hat; und/oder
iii) das gepresste Pellet ein Volumen von 1.200 bis 3.800 mm3, optional von 1.200 bis 2.700 mm³ hat.

10. Verfahren nach einem der Ansprüche 6 bis 9, wobei die beheizte Pressvorrichtung ein Paar von Presselementen umfasst, zwischen denen der Teil der Teigportion des Teigs platziert und gepresst wird, um das Pellet zu bilden, optional wobei:
i) mindestens eines der Presselemente auf die Presstemperatur erwärmt wird; und/oder
ii) die Presselemente jeweils eine Fläche von 1250 bis 1970 mm² aufweisen; optional wobei die Presselemente jeweils eine Fläche von 1520 bis 1660 mm² aufweisen.

11. Verfahren nach einem der Ansprüche 6 bis 10, wobei die Schicht eine längliche Schicht ist und zwei gegenüberliegende Oberflächen und eine Dicke dazwischen aufweist, optional wobei:
i) die Dicke 0,5 bis 3 mm oder 0,6 bis 1,5 mm beträgt; und/oder
ii) die beiden gegenüberliegenden Oberflächen jeweils eine Fläche von 1250 bis 1970 mm², optional von 1520 bis 1660 mm² aufweisen; und/oder
iii) die beiden gegenüberliegenden Oberflächen jeweils 600 bis 1800 Stärkekörnchen pro mm² der jeweiligen Oberfläche aufweisen, wobei die beiden gegenüberliegenden Oberflächen optional jeweils 675 bis 1725 Stärkekörnchen pro mm² der jeweiligen Oberfläche aufweisen.

12. Verfahren nach einem der Ansprüche 6 bis 11, wobei:
i) die Presszeit und die Presstemperatur so gesteuert werden, dass das Agglomerat der Stärkekörnchen 80 bis 99 Gew.-% ungelatinierte Stärke und 1 bis 20 Gew.-% gelatinierte Stärke enthält, jeweils bezogen auf das Gewicht der gesamten Stärke im Pellet; und/oder
ii) die Vielzahl von Stärkekörnchen mindestens eine Stärke aus einem Getreide oder einem Gemüse, gegebenenfalls Kartoffel, enthält.

13. Verfahren nach einem der Ansprüche 6 bis 12, wobei:
i) das Pellet aus der Vielzahl von Stärkekörnchen besteht, die zusammengepresst werden, um das Agglomerat zu bilden, und das Pellet keine kontinuierliche Matrix auf Stärkebasis zwischen den Körnchen umfasst; oder
ii) das Pellet 90 bis 99 Gew.-% Stärkekörnchen und 1 bis 10 Gew.-% kontinuierliche Matrix auf Stärkebasis zwischen den Körnchen umfasst, jeweils bezogen auf das Gewicht der gesamten Stärke in dem Pellet; und optional wobei das Pellet 95 bis 99 Gew.-% Stärkekörnchen und 1 bis 5 Gew.-% kontinuierliche Matrix auf Stärkebasis zwischen den Körnchen umfasst, jeweils bezogen auf das Gewicht der gesamten Stärke in dem Pellet.

14. Verfahren zur Herstellung eines Snacks, wobei das Verfahren die folgenden Schritte umfasst:
i. Bereitstellen einer Vielzahl von Pellets nach einem der Ansprüche 1 bis 5 oder hergestellt nach dem Verfahren nach einem der Ansprüche 6 bis 13; und
ii. Expandieren der Pellets während eines Zubereitungsschritts, um eine Vielzahl von Snack-Stücken herzustellen; wobei optional der Zubereitungsschritt Braten, Backen oder Mikrowellengaren umfasst.

15. Snack, der durch das Verfahren nach Anspruch 14 erhalten werden kann.

## Revendications

1. Boulette d'aliment à grignoter comprenant une pluralité de granules d'amidon formant une couche, les granules comprenant de l'amidon non gélatinisé, les granules étant pressés ensemble en contact mutuel pour former un aggloméré de granules d'amidon ; dans laquelle l'aggloméré des granules d'amidon comprend 60 à 99 % en poids d'amidon non gélatinisé et 1 à 40 % en poids d'amidon gélatinisé, dans chaque cas par rapport au poids de l'amidon total dans la boulette ; laquelle boulette comprend 90 à 99 % en poids de granules d'amidon et 1 à 10 % en poids de matrice à base d'amidon continue entre les granules, dans chaque cas par rapport au poids de l'amidon total dans la boulette ; dans laquelle la couche est une couche allongée qui a deux surfaces opposées et une épaisseur entre elles et les deux surfaces opposées ont chacune 600 à 1800 granules d'amidon par mm² de la surface respective ; et laquelle boulette a une teneur en humidité de 9 à 12,5 % en poids.

2. Boulette d'aliment à grignoter selon la revendication 1, laquelle boulette comprend de 95 à 99 % en poids de granules d'amidon et de 1 à 5 % en poids de matrice à base d'amidon continue entre les granules, dans chaque cas par rapport au poids de l'amidon total dans la boulette.

3. Boulette d'aliment à grignoter selon la revendication 1, laquelle boulette consiste en la pluralité de granules d'amidon pressés ensemble pour former l'aggloméré, et laquelle boulette ne comprend pas de matrice à base d'amidon continue entre les granules.

4. Boulette d'aliment à grignoter selon l'une quelconque des revendications précédentes, dans laquelle l'épaisseur est de 0,5 à 4 mm ou de 0,7 à 1,8 mm ; éventuellement dans laquelle :
i) les deux surfaces opposées ont chacune une superficie de 1250 à 1970 mm², ou de 1520 à 1660 mm² ; et/ou
ii) les deux surfaces opposées ont chacune 675 à 1725 granules d'amidon par mm² de la surface respective.

5. Boulette d'aliment à grignoter selon l'une quelconque des revendications précédentes, dans laquelle :
i) la boulette a une teneur en humidité de 10 à 12 % en poids ; et/ou
ii) l'agglomérat des granules d'amidon comprend 80 à 99 % en poids d'amidon non gélatinisé et 1 à 20 % en poids d'amidon gélatinisé, dans chaque cas par rapport au poids de l'amidon total dans la boulette ; et/ou
iii) la pluralité de granules d'amidon comprend au moins un amidon dérivé d'une céréale ou d'un légume, éventuellement de pomme de terre.

6. Procédé de fabrication d'une boulette d'aliment à grignoter, le procédé comprenant les étapes de :
i. fourniture d'une pâte comprenant une pluralité de granules à base d'amidon, les granules comprenant de l'amidon non gélatinisé, et ayant une teneur en humidité de 16 à 20 % en poids par rapport au poids de la pâte ;
ii. placement d'une portion de la pâte dans un dispositif de pressage chauffé ; et
iii. pressage de la portion de pâte dans le dispositif de pressage chauffé pour former une boulette comprenant une pluralité de granules d'amidon formant une couche, les granules comprenant de l'amidon non gélatinisé, les granules étant pressés ensemble en contact mutuel pour former un agglomérat des granules d'amidon ;
dans lequel le temps de pressage et la température de pressage sont commandés pour faire en sorte que l'agglomérat des granules d'amidon comprenne 60 à 99 % en poids d'amidon non gélatinisé et 1 à 40 % en poids d'amidon gélatinisé, dans chaque cas par rapport au poids de l'amidon total dans la boulette ;
dans lequel la température de pressage est de 100 à 140°C ;
dans lequel le temps de pressage est de 10 à 50 secondes ; et
dans lequel la pression de pressage est de 100000 à 400000 N/m².

7. Procédé selon la revendication 6, dans lequel le temps de pressage et la température de pressage sont commandés pour faire en sorte que la boulette ait une teneur en humidité de 9 à 12,5 % en poids par rapport au poids de la boulette ; éventuellement dans lequel le temps de pressage et la température de pressage sont commandés pour faire en sorte que la boulette ait une teneur en humidité de 10 à 11,5 % en poids par rapport au poids de la boulette, ou de 10,5 à 11 % en poids par rapport au poids de la boulette.

8. Procédé selon la revendication 6 ou la revendication 7, dans lequel :
i) la température de pressage est de 100 à 120°C ; et/ou
ii) le temps de pressage est de 20 à 30 secondes ; et/ou
iii) la pression de pressage est de 300000 à 400000 N.m² ; et/ou
iv) la portion, avant le pressage, a une épaisseur de 1,5 à 5,5 mm, éventuellement de 1,7 à 3,5 mm.

9. Procédé selon l'une quelconque des revendications 6 à 8, dans lequel :
i) la pâte a une teneur en humidité de 16 à 18 % en poids par rapport au poids de la pâte ; et/ou
ii) la portion de pâte a un volume de 2000 à 8000 mm³ ; éventuellement la portion de pâte a un volume de 2300 à 4500 mm³ ; et/ou
iii) la boulette pressée a un volume de 1200 à 3800 mm3, éventuellement de 1200 à 2700 mm³.

10. Procédé selon l'une quelconque des revendications 6 à 9, dans lequel le dispositif de pressage chauffé comprend une paire d'éléments presseurs entre lesquels la portion de la portion de pâte de la pâte est située et pressée pour former la boulette, éventuellement dans lequel :
i) au moins l'un des éléments presseurs est chauffé à la température de pressage ; et/ou
ii) les éléments presseurs ont chacun une superficie de 1250 à 1970 mm² ; éventuellement les éléments presseurs ont chacun une superficie de 1520 à 1660 mm².

11. Procédé selon l'une quelconque des revendications 6 à 10, dans lequel la couche est une couche allongée et a deux surfaces opposées et une épaisseur entre elles, éventuellement dans lequel :
i) l'épaisseur est de 0,5 à 3 mm ou de 0,6 à 1,5 mm ; et/ou
ii) les deux surfaces opposées ont chacune une superficie de 1250 à 1970 mm², éventuellement de 1520 à 1660 mm² ; et/ou
iii) les deux surfaces opposées ont chacune 600 à 1800 granules d'amidon par mm² de la surface respective, éventuellement les deux surfaces opposées ont chacune 675 à 1725 granules d'amidon par mm² de la surface respective.

12. Procédé selon l'une quelconque des revendications 6 à 11, dans lequel :
i) le temps de pressage et la température de pressage sont commandés pour faire en sorte que l'agglomérat des granules d'amidon comprenne 80 à 99 % en poids d'amidon non gélatinisé et 1 à 20 % en poids d'amidon gélatinisé, dans chaque cas par rapport au poids de l'amidon total dans la boulette ; et/ou
ii) la pluralité de granules d'amidon comprend au moins un amidon dérivé d'une céréale ou d'un légume, éventuellement de pomme de terre.

13. Procédé selon l'une quelconque des revendications 6 à 12, dans lequel :
i) la boulette consiste en la pluralité de granules d'amidon pressés ensemble pour former l'aggloméré, et la boulette ne comprend pas de matrice à base d'amidon continue entre les granules ; ou
ii) la boulette comprend 90 à 99 % en poids de granules d'amidon et 1 à 10 % en poids de matrice à base d'amidon continue entre les granules, dans chaque cas par rapport au poids de l'amidon total dans la boulette ; et éventuellement la boulette comprend 95 à 99 % en poids de granules d'amidon et 1 à 5 % en poids de matrice à base d'amidon continue entre les granules, dans chaque cas par rapport au poids de l'amidon total dans la boulette.

14. Procédé de production d'un aliment à grignoter, le procédé comprenant les étapes de :
i) fourniture d'une pluralité de boulettes selon l'une quelconque des revendications 1 à 5 ou fabriquées conformément au procédé de l'une quelconque des revendications 6 à 13 ; et
ii) expansion des boulettes durant une étape de cuisson pour produire une pluralité de morceaux d'aliment à grignoter ;
éventuellement dans lequel l'étape de cuisson comprend une friture, une cuisson au four ou une cuisson aux micro-ondes.

15. Aliment à grignoter pouvant être obtenu par le procédé de la revendication 14.
